## Europäisches Patentamt
## European Patent Office
## Office européen des brevets

(19)

(11) Numéro de publication: **0070244**
**B1**

(12) # FASCICULE DE BREVET EUROPEEN

(45) Date de publication du fascicule du brevet:
02.05.85

(51) Int. Cl.⁴: **C 03 B 35/18**

(21) Numéro de dépôt: **82401325.4**

(22) Date de dépôt: **15.07.82**

(54) **Rouleau de transport de feuilles de verre à température élevée.**

(30) Priorité: **15.07.81 FR 8113805**

(43) Date de publication de la demande:
**19.01.83 Bulletin 83/3**

(45) Mention de la délivrance du brevet:
**02.05.85 Bulletin 85/18**

(84) Etats contractants désignés:
**AT BE DE FR GB IT LU NL SE**

(56) Documents cités:
**FR - A - 2 135 122**
**US - A - 2 495 578**
**US - A - 3 853 525**
**US - A - 3 954 556**

(73) Titulaire: **SAINT-GOBAIN VITRAGE, Les Miroirs 18, avenue d'Alsace, F-92400 Courbevoie (FR)**
(84) Etats contractants désignés: **BE FR GB IT LU NL SE AT**

(73) Titulaire: **VEGLA Vereinigte Glaswerke GmbH, Viktoria Allee 3-5, D-5100 Aachen (DE)**
(84) Etats contractants désignés: **DE**

(72) Inventeur: **Roth, Mario, Laurentiusstrasse 13, D-5100 Aachen (DE)**
Inventeur: **Diederen, Werner, Vogelsang 7, D-5120 Herzogenrath (DE)**
Inventeur: **Ueberwolff, Heinz, Vogelsang 1, D-5120 Herzogenrath (DE)**
Inventeur: **Zilgens, Heinz-Günter, Schnitzlerstrasse 3, D-5132 Uebach-Palenberg (DE)**

(74) Mandataire: **Leconte, Jean-Gérard et al, Saint-Gobain Recherche 39, Quai Lucien Lefranc, F-93304 Aubervilliers Cedex (FR)**

ACTORUM AG

## Description

L'invention a trait à un rouleau constitué d'une âme métallique tubulaire porteuse revêtue d'un manteau de matériau réfractaire pour le transport horizontal de feuilles de verre à l'intérieur d'une enceinte de refroidissement ou de réchauffage à des températures élevées, allant jusqu'à 900°C environ.

Les rouleaux de transport de feuilles de verre destinés à fonctionner à haute température doivent répondre à diverses exigences. L'une des plus importantes est qu'ils n'endommagent par la surface du verre, ramolli à ces températures élevées; en outre, l'usure du manteau doit être relativement faible, sans quoi le temps d'utilisation des rouleaux est trop court et oblige à les changer fréquemment. Enfin, le matériau constitutif du manteau ne doit pas adhérer au verre à température élevée, ce qui détériorerait aussi la surface des feuilles.

Pour répondre à ces objectifs, on connaît des rouleaux de transport de structures diverses. Un type fréquemment utilisé, par exemple, est constitué d'un tube de quartz fondu, muni d'un revêtement fait d'un tissu de fibres de verre ou de silice (DE-AS 1 596 369). Une telle structure exige des échanges fréquents du revêtement fibreux, lors desquels les tubes de quartz, cassants, sont facilement endommagés. Enfin, la fabrication de ces rouleaux et le renouvellement continuel du revêtement sont relativement coûteux.

Selon une autre solution (US-A 2 120 435), on enfile sur un arbre métallique creux une succession d'anneaux circulaires en amiante, anneaux compressibles serrés les uns sur les autres dans le sens axial par des bagues vissées sur des filetages placés aux extrémités du rouleau. Cependant l'amiante se déshydrate à température élevée et il tombe en poussière, de sorte que de tels rouleaux ne sont pas utilisables à très fortes températures et en particulier dans les fours de trempe horizontale.

L'invention a pour objet de fournir un rouleau pour le transport de feuilles de verre à température élevée, exempt des inconvénients des rouleaux connus: en particulier son manteau sera constitué d'un matériau suffisamment doux pour ne pas risquer de blesser la surface des feuilles et qui n'adhère pas au verre à haute température, et possèdera cependant une durée d'usage supérieure à celle des rouleaux connus.

Selon l'invention, ce manteau réfractaire est formé d'un matériau aggloméré à base de silicate de calcium, d'une masse spécifique apparente de 200 à 800 kg/m³; il s'agira avantageusement d'un silicate de calcium pratiquement déshydraté.

Le matériau utilisé selon l'invention pour constituer le manteau du rouleau de transport possède une masse spécifique nettement inférieure à la masse spécifique théorique du silicate de calcium qui est de l'ordre de 2900 kg/m³. Un agglomérat de particules de silicate de calcium d'une aussi faible densité se prête particulièrement bien à l'utilisation proposée. D'une part, l'usure, inévitable, du matériau est étonnamment faible et les manteaux des rouleaux transporteurs selon l'invention ont des durées d'utilisation de l'ordre de 10 fois supérieures à celles des enveloppes des fibres de verre utilisées couramment sur les rouleaux de quartz à revêtement fibreux. Il s'est d'ailleurs révélé que, sur les rouleaux qui ne tournent pas tout à fait rond, cette usure apparaît surtout sur les parties les plus éloignées de l'axe de rotation, ce qui a pour avantage de mettre au rond de soi-même la surface porteuse.

La faible densité joue également un grand rôle parce que les particules ou grains d'impuretés qui s'incrustent éventuellement à la surface se détachent au frottement et tombent facilement. Le silicate de calcium lui-même possède une dureté inférieure à celle du verre transporté, de sorte que ses grains ne blessent ni ne raient sa surface.

Les divers silicates de calcium se prêtent les uns et les autres à la mise en oeuvre de l'invention. Il est cependant très avantageux qu'une grosse partie au moins de l'agglomérat soit constituée de silicate de calcium déshydraté. A cet égard, les compositions constituées en grande partie de wollastonite ou, le cas échéant, d'une proportion relativement importante de silicate de calcium cristallisé à un degré variable ont donné de très bons résultats. Les formes amorphes ou partiellement cristallisées apparaissent lorsqu'on élabore le silicate de calcium par réaction de composés calciques sur du silicate ou du métasilicate de sodium.

En raison de la faible densité demandée au matériau, la liaison entre les particules et grains qui forment l'agglomérat joue un rôle important. Pour obtenir une bonne cohésion du produit lors de sa fabrication, qui s'effectue couramment de façon connue en phase liquide c'est-à-dire par précipitation, il est d'ailleurs connu d'introduire dans le précipité une proportion variable de fibres organiques ou inorganiques ainsi, le cas échéant, qu'une addition de produits organiques ou inorganiques jouant un rôle de liant. Ces additifs sont également avantageux dans le cas où le produit est destiné à la mise en oeuvre de l'invention, pour donner à l'agglomérat la ténacité voulue. On peut d'ailleurs tenir compte de ce que les liants et fibres organiques sont détruits aux températures d'emploi élevées ou brûlent, la liaison des grains de l'agglimérat par frittage à la surface de contact augmentant tandis que le rôle des premiers liants disparaît.

Des résultats particulièrement favorables ont été obtenus avec des matériaux renfermant une proportion de 20 à 75% de wollastonite cristallisée en aiguilles ou fibres d'une longueur allant jusqu'à 1 mm, une proportion de 75 à 20% de silicate de calcium, en particulier de wollastonite, pulvérulent, en grains d'un diamètre tout au plus égal à quelques microns, et une faible partie de carbonate de calcium, de poudre de quartz et de fibres organiques jouant un rôle de liant.

Les procédés de fabrication de ces agglomérats à base de silicate de calcium sont connus et, par exemple, décrits en détail dans la publication de brevet allemande DE-OS 2 832 125. Des agglomérats à base de silicate de calcium possédant les propriétés décrites sont également connus et, par exemple, le brevet US-A 3 804 701 décrit diverses compositions utilisables en tant que matériaux réfractaires thermiquement isolants. On les trouve dans le commerce sous forme de plaques; ils sont d'ailleurs destinés à servir d'isolants pour la fabrication des fours industriels.

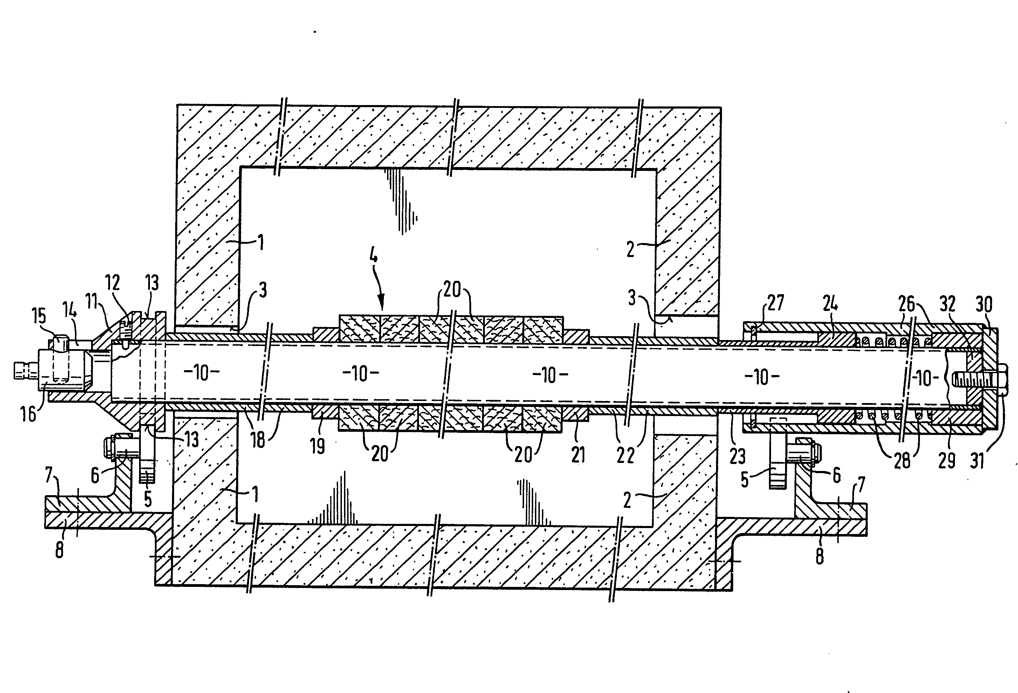

L'invention a encore pour objet une structure de rouleaux transporteurs qui permet d'utiliser ces matériaux en plaques pour fabriquer les rouleaux, structure dont un exemple préféré sera décrit ci-dessous en liaison avec le dessin.

La figure unique est une coupe longitudinale d'un tel rouleau transporteur.

Les parois latérales 1 appartiennent à l'enceinte 2 d'un four de réchauffage de feuilles de verre à l'intérieur duquel les feuilles en question sont acheminées horizontalement à travers une zone à température élevée, sur des rouleaux transporteurs entraînés en rotation. Quand ces feuilles de verre doivent, par exemple, être trempées thermiquement, il faut les porter à une température de l'ordre de 630°C. Dans ce but sont prévus, à l'intérieur du four, des dispositifs de chauffage appropriés tels que des éléments électriques radiants. Les rouleaux de tranport placés à l'intérieur du four atteignent ainsi des températures nettement supérieures et peuvent être portés jusqu'à quelque 850 ou 900°C.

Les parois latérales 1 sont pourvues d'ouvertures 3 à travers lesquelles passent les rouleaux transportateurs 4 dont chacun est porté à l'extérieur de l'enceinte par deux paires de galets 5 montés fous. Les axes 6 de ces galets 5 sont montés sur des cornières 7 disposées elles-mêmes le long du bâti porteur 8 du four.

Le rouleau de transport comprend une âme tubulaire 10 en acier réfractaire. Sur l'une des extrémités de celle-ci s'emboîte un manchon d'accouplement 11 qu'une vis de blocage 12 solidarise avec l'âme 10. Le machon d'accouplement 11, dans la partie qui entoure l'âme 10, porte une gorge 13 par l'intermédiaire de laquelle il repose sur les galets porteurs 5, qui centrent ainsi le rouleau transporteur en direction longitudinale et encaissent les efforts longitudinaux auxquels ce rouleau est soumis.

A l'extrémité opposée, la manchon d'accouplement 11 est muni d'un alésage ouvert d'une fente radiale où vient se loger un ergot 15 monté perpendiculairement à l'axe sur une broche 16 accouplée au moteur d'entraînement, qui pénètre dans l'alésage, devenant ainsi solidaire en rotation de l'âme 10 par l'intermédiaire de l'ergot 15, de manière à entraîner positivement le rouleau transporteur.

Sur l'âme 10 s'enfilent de gauche à droite une entretoise tubulaire 18, un disque de pressage 19 d'un diamètre supérieur à celui de l'entretoise, une série d'anneaux cylindriques 20, un second disique de pressage 21, puis une entretoise 22 et une douille de pressage 23 dont l'extrémité externe porte une collerette 24.

Les anneaux 20 dont l'ensemble forme le manteau du rouleau transporteur sont constitués d'un agglomérat à base de silicate de calcium; ils sont découpés dans une plaque à l'aide d'outils à bois conventionnels. Leur épaisseur dans la direction de l'axe du rouleau transporteur peut aller de 20 à 100 mm selon les plaques utilisées, alors que leur diamètre extérieur va de 25 à 100 mm selon l'utilisation.

La collerette 24 glisse dans un tube 26; elle est maintenue à l'intérieur par un circlips 27, mais poussée vers les disques par un ressort hélicoïdal 28 en compression dont l'extrémité opposée porte sur une douille 29, elle-même en butée sur un embout de fixation 30 soudé sur le tube 26. L'embout est enfin fixé à l'aide d'une vis 31 sur la rondelle 32 soudée au bout de l'âme 10 et le tube 26 sert de palier sur les galets 5.

Ce montage en compression permet d'absorber par l'intermédiaire du ressort d'une part les écarts de dilatation thermique entre l'âme 10 et le manteau, d'autre part la rétraction subie par ce dernier sous l'effet de la perte au feu du matériau, de sorte que les anneaux restent toujours étroitement serrés. Comme le boîtier à ressort se trouve à l'extérieur du four, il n'est pas soumis à une température élevée et son fonctionnement n'est pas compromis par la chaleur.

Il est à noter que l'on pourrait certes utiliser un manteau formé d'un tube unique, toutefois moins commode à fabriquer, ou au contraire séparer les anneaux 20 par des entretoises, voire monter séparément chacun d'eux.

En tant que matériau aggloméré à base de silicate de calcium, on peut par exemple utiliser, pour fabriquer le manteau, des produits ayant l'une des compositions suivantes en poids:

*Exemple 1*
— Wollastonite cristallisée en aiguilles de moins de
   1 mm de long:   50%
— Silicate de calcium en poudre:   40%
— Quartz en poudre à grains fins:   5%
— Carbone de calcium:   3%
— Fibres organiques:   2%

L'élaboration de cette composition conduit à une masse spécifique de l'ordre de 400 kg/m$^3$.

*Exemple 2*
— Wollastonite en poudre:   66,5%
— Wollastonite en aiguilles:   20  %
— Quartz en aiguilles:   8  %
— Carbonate de calcium:   3,5%
— Fibres de cellulose:   2  %

Un tel matériau possède en raison de la teneur relativement élevée en poudre de wollastonite à grains fins une masse spécifique de l'ordre de 670 kg/m$^3$.

*Exemple 3*
— Wollastonite en poudre:   60%
— Wollastonite en aiguilles:   30%
— Poudre de quartz:   3%
— Carbone de calcium:   3%
— Fibres de cellulose:   4%

Ce matériau possède lui aussi une masse spécifique relativement élevée de l'ordre de 650 kg/m$^3$.

*Exemple 4*
On utilise pour fabriquer les anneaux 20 des plaques isolantes à base de silicate de calcium d'une épaisseur de 50 mm, disponibles dans le commerce sous l'appellation Promasil 1100 (la marque Promasil est une marque déposée appartenant à la firme PROMAT Gesellschaft für moderne Baustoffe mbH und Co. KG). La masse spécifique de ce matériau atteint 400 kg/m$^3$. Après 48 h de séjour à 800°C, la perte au feu est voisine de 8%, c'est-à-dire que la masse spécifique tombe aux environs de 370 kg/m³.

*Exemple 5*

On utilise des anneaux 20 découpés dans des plaques isolantes à base de silicate de calcium disponibles dans le commerce sous la dénomination Salü-200/800 ou Salü-200/1000 (la marque Salü est une marque déposée de la firme Saline Lüneburg und Chemische Fabrik GmbH). Ce matériau a une masse spécifique de 240 à 260 kg/m³.

## Revendications

1. Rouleau constitué d'une âme (10) métallique tubulaire porteuse revêtue d'un manteau (20) de matériau réfractaire, pour le transport horizontal de feuilles de verre à l'intérieur d'une enceinte (2) à des températures allant jusqu'à 900°C environ, caractérisé en ce que son manteau (20) réfractaire est constitué d'un matériau aggloméré à base de silicate de calcium d'une masse spécifique apparente de 200 à 800 kg/m³.

2. Rouleau selon la revendication 1, caractérisé en ce que le silicate de calcium est pratiquement déshydraté.

3. Rouleau selon l'une des revendications précédentes, caractérisé en ce que le matériau aggloméré possède une masse spécifique de l'ordre de 240 à 600 kg/m³ et avantageusement de l'ordre de 400 kg/m³.

4. Rouleau selon l'une des revendications précédentes, caractérisé en ce que l'agglomérat renferme en proportions pondérales:

— de 20 à 75% de wollastonite,
— de 75 à 20% de poudre de silicate de calcium,
— de 0 à 10% d'un liant inorganique, et
— de 0 à 10% de fibres organiques ou non.

5. Rouleau selon la revendication 4, caractérisé en ce que les aiguilles de wollastonite possèdent une longueur de l'ordre de 1 mm et que la poudre de silicate de calcium est constituée de grains d'un diamètre ne dépassant pas quelques microns.

6. Rouleau selon l'une des revendications précédentes, caractérisé par la composition pondérale suivante:

| | |
|---|---|
| — Wollastonite en aiguilles: | 50% |
| — Silicate de calcium pulvérulent: | 40% |
| — Poudre de quartz à grains fins: | 5% |
| — Carbonate de calcium: | 3% |
| — Fibres minérales: | 2% |

7. Rouleau selon l'une des revendications 1 à 6, caractérisé en ce que le manteau est constitué d'anneaux cylindriques (20) distincts, espacés le long de l'âme porteuse (10).

8. Rouleau selon l'une des revendications 1 à 6, caractérisé en ce que le manteau est constitué d'un tube enfilé sur l'âme (10).

9. Rouleau selon l'une des revendications 1 à 6, caractérisé en ce que le manteau est constitué d'anneaux cylindriques (20) enfilés côte à côte.

10. Rouleau selon la revendication 9, caractérisé en ce qu'un ressort hélicoïdal (28) appuyant d'une part sur l'âme (10) et d'autre part sur les anneaux cylindriques (20) en assure le serrage en compensant les dilatations.

11. Rouleau selon la revendication 10, caractérisé en ce que le ressort (28) hélicoïdal appuie sur les anneaux (20) par l'intermédiaire d'une douille (23) coulissant sur l'âme (10), le ressort et l'extrémité de la douille étant enfermés dans un tube cylindrique (26) dont la portée extérieure sert de palier au rouleau (14).

12. Rouleau selon l'une des revendications 10 et 11, caractérisé en ce que son extrémité porteuse du ressort (28) est placée à l'extérieur de l'enceinte (2).

13. Rouleau selon l'une des revendications 10 à 12, caractérisé en ce que son accouplement sur la transmission motrice comprend un manchon d'accouplement (11) coiffant l'extrémité de l'âme (10) opposée à celle qui porte le ressort (28) et une broche mâle (16) pénétrant dans ce manchon, pour mettre en prise à l'intérieur d'une fente correspondante (14) un ergot (15) perpendiculaire à l'axe.

## Patentansprüche

1. Transportwalze aus einem von einem Mantel (20) aus hitzebeständigem Material umgebenen metallischen Tragrohr (10), für den horizontalen Transport von Glasscheiben in einem eine Temperatur bis etwa 900°C aufweisenden Ofen (2), dadurch gekennzeichnet, dass der Mantel (20) aus hitzebeständigem Material aus einem konglomeratartigen Material auf der Basis von Calciumsilikat besteht und eine Rohdichte von 200 bis 800 kg/m³ aufweist.

2. Transportwalze nach Anspruch 1, dadurch gekennzeichnet, dass das Calciumsilikat im wesentlichen hydratwasserfreies Calciumsilikat ist.

3. Transportwalze nach einem der voraufgehenden Ansprüche, dadurch gekennzeichnet, dass das konglomeratartige Material eine Rohdichte von etwa 240 bis 600 kg/m³, und vorzugsweise von etwa 400 kg/m³ aufweist.

4. Transportwalze nach einem der voraufgehenden Ansprüche, dadurch gekennzeichnet, dass das konglomeratartige Material in Gewichtsanteilen folgende Bestandteile umfasst:

— 20 bis 75% Wollastonit
— 75 bis 20% Calciumsilikatpulver
— 0 bis 10% anorganische Bindemittel, und
— 0 bis 10% organische oder anorganische Fasern.

5. Transportwalze nach Anspruch 4, dadurch gekennzeichnet, dass die nadelartigen Wollastonitkristalle eine Länge von grössenordnungsmässig 1 mm, und das Calciumsilikatpulver eine Korngrösse von maximal einigen Mikrometern Durchmesser aufweist.

6. Transportwalze nach einem der voraufgehenden Ansprüche, gekennzeichnet durch folgende Zusammensetzung in Gewichtsanteilen:

| | |
|---|---|
| — faserförmige Wollastonitkristalle: | 50% |
| — pulverförmiges Calciumsilikat: | 40% |
| — feinkörniges Quarzpulver: | 5% |
| — Calciumcarbonat: | 3% |
| — anorganische Fasern: | 2% |

7. Transportwalze nach einem der Ansprüche 1 bis 6, dadurch gekennzeichnet, dass der Mantel aus einzelnen zylindrischen Ringen (20) besteht, die mit gegenseitigem Abstand entlang dem Tragrohr (10) angeordnet sind.

8. Transportwalze nach einem der Ansprüche 1 bis 6, dadurch gekennzeichnet, dass der Mantel aus einem auf dem Tragrohr (10) angeordneten rohrförmigen Körper besteht.

9. Transportwalze nach einem der Ansprüche 1 bis 6, dadurch gekennzeichnet, dass der Mantel aus lückenlos aneinandergereihten zylindrischen Ringen besteht.

10. Transportwalze nach Anspruch 9, dadurch gekennzeichnet, dass eine sich einerseits am Tragrohr (10) und andererseits gegen die aneinandergereihten zylindrischen Ringe (20) abstützende Wendelfeder (28) die Ringe (20) aneinanderpresst und die Wärmeausdehnung kompensiert.

11. Transportwalze nach Anspruch 10, dadurch gekennzeichnet, dass die Wendelfeder (28) auf die aneinandergereihten Ringe (20) über eine auf dem Tragrohr (10) verschiebbare Büchse (23) einwirkt, und dass die Feder (28) und das Ende der Büchse (23) von einem Hohlzylinder (26) umgeben sind, dessen äussere Tragfläche als Lager für die Transportwalze dient.

12. Transportwalze nach einem der Ansprüche 10 und 11, dadurch gekennzeichnet, dass das die Feder (28) tragende Ende der Transportwalze ausserhalb des Ofens (2) angeordnet ist.

13. Transportwalze nach einem der Ansprüche 10 bis 12, dadurch gekennzeichnet, dass ihre Ankupplung an den Antrieb eine auf das der Feder (28) gegenüber angeordnete Ende des Tragrohrs (10) aufgesetzte Kupplungsbüchse (11) und einen in die Kupplungsbüchse (11) eingreifenden Kupplungsdorn (16) umfasst, der einen in einen entsprechenden Schlitz (14) eingreifenden senkrecht zur Achse angeordneten Mitnehmerdorn (15) aufweist.

**Claims**

1. A roller comprising a tubular metal supporting core (10) covered with a sheath (20) of refractory material, for horizontal transport of glass sheets inside an enclosure (2) at temperatures which may be up to about 900° C, characterised in that its refractory sheath (20) is formed of an agglomerate material based on calcium silicate having an apparent density from 200 to 800 kg/m$^3$.

2. A roller according to claim 1, characterised in that the calcium silicate is substantially anhydrous.

3. A roller according to one of the preceding claims, characterised in that the agglomerate material has a density of the order of 240 to 600 kg/m$^3$, advantageously of the order of 400 kg/m$^3$.

4. A roller according to one of the preceding claims, characterised in that the agglomerate contains, in proportions by weight:

— from 20 to 75% of wollastonite
— from 75 to 20% of calcium silicate powder
— from 0 to 10% of an inorganic binder, and
— from 0 to 10% of organic or inorganic fibres.

5. A roller according to claim 4, characterised in that the needles of wollastonite have a length of the order of 1 mm and in that the calcium silicate powder is formed of grains of diameter not exceeding a few microns.

6. A roller according to one of the preceding claims, characterised by the following composition by weight:

| | |
|---|---|
| — Wollastonite needles | 50% |
| — Calcium silicate powder | 40% |
| — Fine grain quartz powder | 5% |
| — Calcium carbonate | 3% |
| — Mineral fibres | 2% |

7. A roller according to one of claims 1 to 6, characterised in that the sheath comprises separate cylindrical rings (20) spaced along the supporting core (10).

8. A roller according to one of claims 1 to 6, characterised in that the sheath comprises a tube surrounding the core (10).

9. A roller according to one of claims 1 to 6, characterised in that the sheath comprises cylindrical rings (20) mounted side-by-side.

10. A roller according to claim 9, characterised in that a helicoidal spring (28) bears on the one hand on the core (10) and on the other hand on the cylindrical rings (20) to effect clamping to compensate for expansions.

11. A roller according to claim 10, characterised in that the helicoidal spring (28) bears on the rings (20) through a sleeve (23) slidable on the core (10), the spring and the end of the sleeve being enclosed in a cylindrical tube (26) of which the exterior surface serves as a bearing for the roller (4).

12. A roller according to claim 10 or 11, characterised in that its end carrying the spring (28) is positioned outside the enclosure (2).

13. A roller according to one of claims 10 to 12, characterised in that its coupling to the drive transmission comprises a coupling collar (12) covering the end of the core (10) opposite that which carries the spring (28) and a male plug (16) penetrating the collar, to put a lug (15) perpendicular to the axis into engagement with a corresponding slot (14).